## Europäisches Patentamt
## European Patent Office
## Office européen des brevets

(19)

(11) Veröffentlichungsnummer: **0 239 902**
A2

(12)

# EUROPÄISCHE PATENTANMELDUNG

(21) Anmeldenummer: **87104255.2**

(22) Anmeldetag: **23.03.87**

(51) Int. Cl.³: **A 61 C 17/00**

(30) Priorität: **02.04.86 CH 1290/86**

(43) Veröffentlichungstag der Anmeldung:
**07.10.87 Patentblatt 87/41**

(84) Benannte Vertragsstaaten:
**DE FR GB IT**

(71) Anmelder: **Reinhard, Peter**
**Weingartenstrasse 8**
**CH-8957 Spreitenbach(CH)**

(71) Anmelder: **Römhild, Ludwig, Dr.**
**Am Kugelfeld 3**
**D-8240 Berchtesgaden(DE)**

(72) Erfinder: **Römhild, Ludwig, Dr.**
**Am Kugelfeld 3**
**D-8240 Berchtesgaden(DE)**

(72) Erfinder: **Hartmann, Erwin**
**Gugelweg 15**
**CH-5115 Möriken(CH)**

(72) Erfinder: **Reinhard, Peter**
**Weingartenstrasse 8**
**CH-8957 Spreitenbach(CH)**

(74) Vertreter: **EGLI-EUROPEAN PATENT ATTORNEYS**
**Horneggstrasse 4**
**CH-8008 Zürich(CH)**

(54) **Dentalgerät mit einem Werkzeug zur Zahnbehandlung.**

(57) Das Dentalgerät weist einen Griffschaft (2) auf, in welchem ein Futter (9) zur Aufnahme eines Werkzeuges (3) vorgesehen ist. Zur Fixierung des Werkzeuges (3) ist im Futter (9) ein Kupplungsstift (16) gelagert, der durch eine, unter Federkraft stehende Stellhülse (11) in eine Nut des Werkzeuges (3) einschiebbar ist. Das Lösen und Wechseln des Werkzeuges (3) kann durch Verschieben der Stellhülse (11) durch einen Betätigungsring (5) sehr schnell erfolgen, so dass gegenüber bekannten Dentalgerätten der Werkzeugwechsel wesentlich schneller erfolgen kann, was sich bei mechanischen Scalern besonders vorteilhaft auswirkt.

FIG. 2

EP 0 239 902 A2

## Dentalgerät mit einem Werkzeug zur Zahnbehandlung

Die Erfindung betrifft ein Dentalgerät mit einem Werkzeug zur Zahnbehandlung, wobei das Werkzeug in einem Griffschaft fest eingesetzt ist und daraus entfernbar ist.

Dentalgeräte für manuelles Arbeiten an den Zähnen sind in verschiedenen Ausführungsformen bekannt. In der einfachsten Ausführungsform ist das Dentalgerät ein aus einem einzigen Stück bestehendes Gerät, welches aus einem Griffschaft und einem Werkzeug besteht. Da bei der Zahnbehandlung Werkzeuge unterschiedlicher Form und Grösse eingesetzt werden müssen, muss eine entsprechend grosse Zahl von Geräten bereitgestellt werden. Zu Geräten dieser Ausführungsform sind auch solche zu rechnen, bei welchen zwar Griffschaft und Werkzeug aus zwei Teilen bestehen, diese Teile jedoch nicht lösbar zusammengefügt sind.

Weiter sind zweiteilige Dentalgeräte bekannt, bei denen der Griffschaft und das Werkzeug manuell oder mit einem Schraubenschlüssel lösbar miteinander verbunden sind. Bei der ersten Ausführungsform wird die Verbindung durch eine Spannzange verwirklicht, welche jedoch zusätzlich eine
Sicherung gegen Verdrehung des Werkzeuges benötigt. Durch
Drehen einer Ueberwurfhülse kann das Werkzeug am
Griffschaft festgespannt oder gelöst werden. Damit wird
erreicht, dass bei einem Bruch des Werkzeuges oder bei
Abnützung desselben ein Auswechseln des Werkzeuges
problemlos möglich ist.

Dasselbe gilt auch für die zweite Ausführungsform, bei
welcher an dem Fussteil des Werkzeuges ein Konus und
daran anschliessend ein Gewindebolzen angeformt sind.
Konus und Gewindebolzen sind in eine in dem Griffschaft
vorgesehene Gewindebohrung mit einem an der
Bohrungsmündung angeformten Konus einschraubbar und mit
einem Schraubenschlüssel festziehbar. Auch hier kann mit
dieser Lösung das Werkzeug im Bedarfsfalle problemlos
ausgewechselt werden.

Da es bei den Dentalgeräten der erwähnten Art eine
unabdingbare Forderung ist, dass der Griffschaft und das
Werkzeug zuverlässig derart miteinander verbunden sind,
dass die bei der Zahnbehandlung ausgeübten, teilweise
recht beträchtlichen Kräfte, vor allem in Richtung der
Schaftachse und in Umfangsrichtung, ohne Relativbewegung
zwischen Griffschaft und Werkzeug aufgebracht werden
können. Dies führt dazu, dass bei jenem Gerät mit
Spannzange eine zusätzliche Sicherung gegen Verdrehen und
bei diesem Gerät ein Sicherungskonus vorgesehen werden
muss.

Hier setzt die Erfindung ein, der die Aufgabe
zugrundeliegt, ein Dentalgerät der eingangs beschriebenen
Art so auszugestalten, dass ein äusserst schnelles
Wechseln des Werkzeugs ermöglicht wird und eine feste, unverrückbare Verbindung zwischen dem Griffschaft und dem
Werkzeug bei allen auftretenden Beanspruchungen des
Gerätes zuverlässig gewährleistet ist.

Diese Aufgabe wird gemäss der Erfindung dadurch gelöst,
dass an dem einen Ende des Griffschaftes ein den Fussteil
des Werkzeuges aufnehmendes Futter vorgesehen ist, in
welchem ein Rastglied geführt ist, welches durch ein im
Griffschaft angeordnetes Stellglied in eine den Fussteil
fixierenden Kupplungslage bewegbar ist.

Die Erfindung ist in der Zeichnung in einem
Ausführungsbeispiel dargestellt und nachfolgend
beschrieben. Es zeigen:

Fig. 1          eine schematisch dargestellte Ansicht eines
                Dentalgerätes, z.B. eines Scalers,

Fig. 2          einen schematisch dargestellten
                Teillängsschnitt des Gerätes nach Fig. 1,

Fig. 3          eine schematisch dargestellte Teilansicht
                des im Griffschaft untergebrachten
                Stellgliedes in der den Fuss des Werkzeuges
                durch den Kupplungsstift fixierenden
                Kupplungslage.

Fig. 4          einen Schnitt längs der Linie IV - IV in
                Fig. 3,

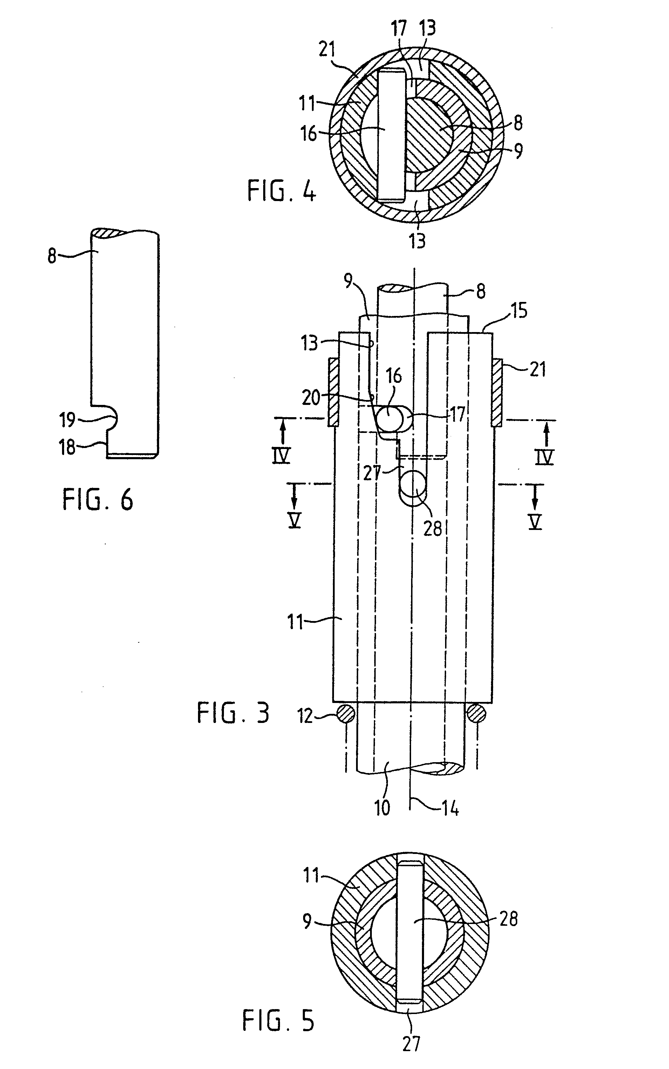

Fig. 5          einen Schnitt längs der Linie V - V in Fig.
                3 und

Fig. 6          eine Ansicht des Fussteiles des Werkzeuges eines Dentalgerätes.

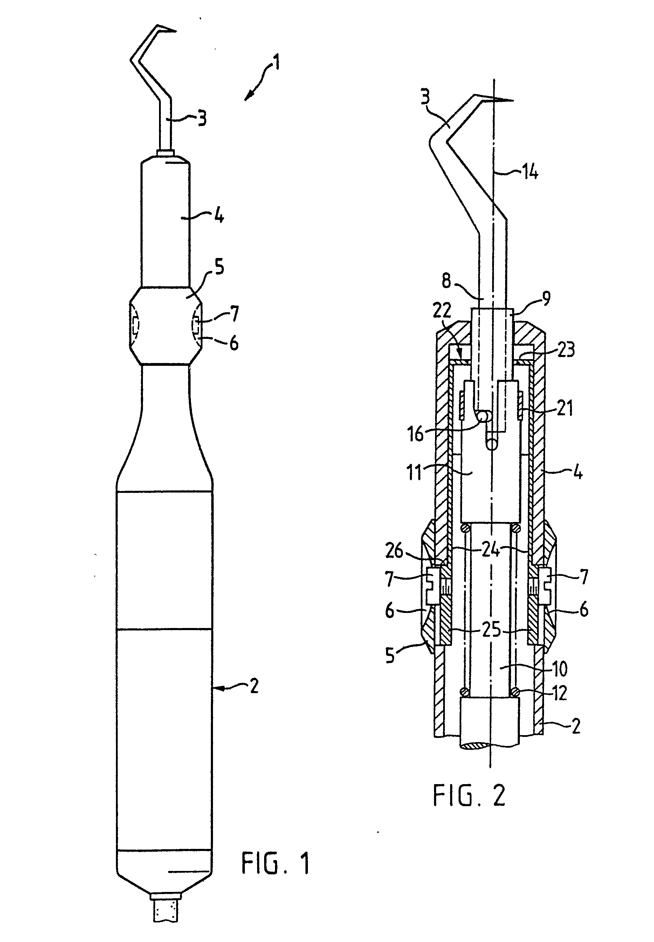

Das in Fig. 1 dargestellte Dentalgerät 1 weist einen Griffschaft 2 und ein Werkzeug 3 auf. An dem werkzeugseitigen Ende 4 des Griffschaftes 2 ist ein Betätigungsring 5 verschiebbar geführt. Die Verschiebung des Betätigungsringes 5 und damit das Lösen und Auswechseln des Werkzeuges 3 ist jedoch nur möglich, wenn zwei am Betätigungsring 5 in Vertiefungen 6 liegende Drücker einwärts gedrückt werden. Auch wenn nur ein Drücker 7 eingedrückt wird, wie dies während der Zahnbehandlung unbeabsichtigterweise möglich sein kann, wird dadurch das Werkzeug 3 nicht vom Griffschaft 2 getrennt; nur beim Eindrücken beider Drücker 7 kann die Verbindung zwischen Griffschaft 2 und Werkzeug 3 gelöst werden.

Der in Fig. 2 dargestellte Längsschnitt zeigt das werkzeugseitige Ende 4 des Griffschaftes 2 und das Werkzeug 3, welch letzteres mit seinem Fussteil 8 in ein Futter 9 eingesetzt ist. Das Futter 9 ist Teil eines in dem Griffschaft 2 untergebrachten Stabes 10, auf dem eine Stellhülse 11 gegen die Kraft einer Druckfeder 12 verschiebbar geführt ist.

In der Stellhülse 11 sind, siehe Fig. 3, zwei Längsschlitze 13 mit unterschiedlicher Schlitzbreite gegenüberliegend angeordnet, welche sich in Richtung der Achse 14 des Griffschaftes 2 erstrecken und gegen die werkzeugseitige Stirnseite 15 offen ist.

Wie aus Fig. 4 ersichtlich ist, ragen die Enden eines Kupplungsstiftes 16 in die beiden Längsschlitze 13. Der Kupplungsstift 16 liegt hierbei in einer senkrecht zur
Geräteachse 14 liegenden Nut 17 des Futters 9.

Am Ende des Fussteils 8 des Werkzeuges 3 ist eine Fläche
18 eingearbeitet, an deren Uebergang zum vollen
Fussteilquerschnitt eine nutförmige Vertiefung 19
vorgesehen ist, siehe Fig. 6.

Die Kontur der Längsschlitze 13 weist eine zur
Geräteachse 14 schräggeneigte Partie 20 auf. Wird die
Stellhülse 11 durch die Kraft der Druckfeder 12 gegen das
werkzeugseitige Ende 4 des Griffschaftes 2 geschoben,
wird durch die schräggeneigte Partie 20 der beiden
Längsschlitze 13 der Kupplungsstift 16 in die nutförmige
Vertiefung 19 des Fussteils 8 geschoben. Dies entspricht
der Darstellung in Fig. 3 und in Fig. 6. Die Neigung der
schrägen Partie 20 ist so gewählt, dass zwischen dem
Kupplungstift 16 und der schrägen Partie 20 Selbsthemmung
beteht. Durch diese Anordnung des Kupplungsstiftes 16
wird erreicht, dass nicht nur eine spielfreie Verbindung
zwischen dem Werkzeug 3 und dem Griffschaft 2 geschaffen
wird, sondern ein Lösen dieser Verbindung durch die bei
der Zahnbehandlung auftretenden Kräfte nicht vorkommen
kann. Insbesondere ist durch die Verwendung des
Kupplungsstiftes 16 ein Drehen des Werkzeuges 3 auch beim
Auftreten sehr grosser Umfangskräfte an dem Werkzeug
nicht möglich. Ein auf der Stellhülse 11 angeordneter
Sicherungsring 21 verhindert das Herausfallen des
Kupplungsstiftes 16.

Da die Stellhülse 11 sich im Innern des Griffschaftes 2
befindet, ist zur Betätigung derselben eine
Betätigungshülse 22 vorgesehen, die werkzeugseitig einen Innenflansch 23 aufweist, der für die Verschiebung der Stellhülse 11 an der Stirnseite 15 derselben angreift. Auf der dem Innenflansch 23 abgewandten Ende der Betätigungshülse 22 sind zwei elastisch verformbare Arme 24 angeformt, die an ihrem Ende eine verstärkte Partie 25 aufweisen, mit Hilfe welcher sich die Arme 24 am Innenrand von Oeffnungen 26 abstützen, die unter den Vertiefungen 6 des Betätigungsringes 5 liegen. Beim Drücken der beiden Drücker 7 werden die Arme 24 elastisch einwärts gebogen, so dass sie vom Innenrand der Oeffnungen 26 entfernt sind und damit durch den Betätigungsring 5 verschoben werden können. Beim Zurückschieben des Betätigungsringes 5 schnappen die verstärkten Partien 25 wieder in die Oeffnungen 26 ein.

In den verstärkten Partien 25 der Arme 24 ist der Drücker 7, z.B. in Form einer Zylinderschraube, befestigt, der in die Vertiefung 6 des Betätigungsringes 5 ragt.

Zur Sicherung der Stellhülse 11 gegen Drehung ist in den Längsschlitzen 13 je eine radial verlaufende Schlitzpartie 27 angeordnet. In die beiden Schlitzpartien 27 ragen die Enden eines Anschlagstiftes 28, siehe Fig. 5, welcher in dem Futter 9 fest gelagert ist.

Die vorstehend beschriebene, im Griffschaft 2 angeordnete Verbindung zwischen Griffschaft und Werkzeug hat sich als sehr zuverlässige Verbindung erwiesen, welche bei allen manuellen Dentalgeräten 1 anwendbar ist. Wegen der äusserst raschen Möglichkeit des Werkzeugwechsels ist diese Verbindung bei mechanischen, d.h. motorisch betätigbaren Scalern in besonders vorteilhafter Weise anwendbar.

## Patentansprüche

1. Dentalgerät (1) mit einem Werkzeug (3) zur Zahnbehandlung, wobei das Werkzeug in einem Griffschaft (2) fest eingesetzt ist und daraus entfernbar ist, dadurch gekennzeichnet, dass an dem einen Ende (4) des Griffschaftes (2) ein den Fussteil (8) des Werkzeuges (3) aufnehmendes Futter (9) vorgesehen ist, in welchem ein Rastglied (16) geführt ist, welches durch ein im Griffschaft angeordnetes Stellglied (11) in eine den Fussteil fixierende Kupplungslage bewegbar ist.

2. Dentalgerät nach Anspruch 1, dadurch gekennzeichnet, dass das Rastglied ein senkrecht zur Geräteachse (14) liegender verschiebbarer Kupplungsstift (16) ist, welcher in dem Stellglied (11) bewegbar geführt ist und in der den Fussteil (8) fixierenden Kupplungslage in eine nutförmige Vertiefung (19) des Fussteiles einrastbar ist.

3. Dentalgerät nach Anspruch 1 oder 2, dadurch gekennzeichnet, dass das Stellglied eine Stellhülse (11) ist, welche auf dem Futter (9) in Richtung der Geräteachse (14) verschiebbar geführt ist und unter der Wirkung der Kraft einer Feder (12) steht.

4. Dentalgerät nach Anspruch 1, dadurch gekennzeichnet, dass in der Stellhülse (11) zwei gegen die eine Stirnseite (15) offene, sich in Richtung der Geräteachse (14) erstreckende Längsschlitze (13) ausgespart sind, in welchen die Enden des Kupplungsstiftes (16) ragen und in der Kupplungslage durch eine zur Geräteachse (4) schräggeneigte Partie
(20) der Schlitzkontur in ihrer Lage gehalten ist.

5. Dentalgerät nach einem der Ansprüche 1 bis 4, dadurch
gekennzeichnet, dass in dem Grund der beiden
Längsschlitze (13) zwei diametral angeordnete
Schlitzpartien (27) vorgesehen sind, in welche die
Enden eines Anschlagstiftes (28) zur Sicherung der
Stellhülse (11) gegen Drehung ragen.

6. Dentalgerät nach einem der Ansprüche 1 bis 5, dadurch
gekennzeichnet, dass das Stellglied (11) in einem
Hohlraum des Griffschaftes (2) liegt und durch ein von
aussen bedienbares Betätigungsglied (22) zum Entfernen
oder zum Einsetzen des Werkzeuges (3) verschiebbar ist.

7. Dentalgerät nach Anspruch 6, dadurch gekennzeichnet,
dass das Betätigungsglied eine mit einem Innenflansch
(23) versehene Betätigungshülse (22) ist, an welcher
sich an der dem Innenflansch abgewandten Seite zwei
diametral angeordnete elastisch federnde Arme (24) in
Richtung der Geräteachse (14) erstrecken, welche an
Oeffnungen (26) des Griffschaftes (2) enden und mit
einem Drücker (7), z.B. einer Kopfschraube, in ein auf
dem Griffschaft verschiebbar geführtes
Betätigungsmittel (5) ragen.

8. Dentalgerät nach Anspruch 7, dadurch gekennzeichnet,
dass das Betätigungsmittel ein auf dem Griffschaft (2)
geführter Betätigungsring (5) ist, in welchem zwei
diametral angeordnete Vertiefungen (6) eingearbeitet
sind, in denen eine Bohrung liegt, durch welche der
Drücker (7) ragt.

9. Dentalgerät nach Anspruch 7 oder 8, dadurch
   gekennzeichnet, dass die Arme (24) der
   Betätigungshülse (22) sich mit einer Verstärkung (25)
   am Armende an den Rand der Oeffnungen (26) als
   Verschiebesicherung abstützen.

FIG. 1

FIG. 2

FIG. 4

FIG. 6

FIG. 3

FIG. 5